# EUROPÄISCHE PATENTSCHRIFT

(11) **EP 1 315 179 B1**
(45) Veröffentlichungstag und Bekanntmachung des Hinweises auf die Patenterteilung: **17.03.2004**
(21) Anmeldenummer: 02020279.2
(22) Anmeldetag: 11.09.2002
(51) Int. Cl.: H01F 27/14, G01F 23/62

(54) **Füllstandsanzeiger**
Level indicator
Jauge

(30) Priorität: 22.11.2001 DE 10157148
(43) Veröffentlichungstag der Anmeldung: 28.05.2003
(73) Patentinhaber: Messko Albert Hauser GmbH & Co. KG, 61440 Oberursel/Taunus (DE)
(72) Erfinder: Krüger, Werner, 61203 Reichelsheim (DE); Viereck, Karsten, Dr., 93128 Regenstauf (DE)
(74) Vertreter: Meier, Gerald Heinz

(56) Entgegenhaltungen:
- FR-A- 2 717 575
- US-A- 5 265 032

## Beschreibung

Die Erfindung betrifft eine Füllstandsanzeige zur Ölstandsmessung insbesondere im Ölausdehnungsgemäß von Transformatoren, Drosselspulen oder Stufenschaltern.

Ein solcher Füllstandsanzeiger ist aus der US 5,265,032 bekannt. Diese Schrift offenbart ein computergestütztes Verfahren zur Fernerfassung eines Füllstandes in einem Flüssiggasbehälter und zur Datenübermittlung zwischen dem Tank und einem Computer. Zur Ermittlung des Füllstandes ist dabei ein elektrisches Füllstandsmessgerät vorgesehen, das elektrische Signale erzeugt, die von einem Übertrager periodisch zum Computer übermittelt werden.

Ein weiterer Füllstandsanzeiger ist aus der Firmenschrift "Magnetischer Füllstandsanzeiger, Typenreihe MTO", der Anmelderin, Impressum IN185/02de-0401/1000, bekannt. Der bekannte Füllstandsanzeiger besteht aus einem Geberteil und einem Anzeigeteil, die trennbar miteinander verbunden sind. Das Geberteil besitzt eine öldichte Flanschplatte und wird direkt in die Gefäßwand des Ölausdehnungsgefäßes, dessen Füllstand angezeigt werden soll, eingebaut. Eine Schwimmerstange überträgt die Hubbewegung eines Schwimmers auf eine Welle. Diese Welle ist über eine Magnetkupplung mit einer Zeigerachse im Anzeigeteil verbunden, die wiederum mit einem Zeiger in Verbindung steht. Diese bekannten Füllstandsanzeiger können zusätzlich mit einem oder mit zwei Mikroschaltern ausgestattet sein, die etwa beim Erreichen der "min"- oder "max"-Position ein elektrisches Signal geben. Der bekannte Füllstandsanzeiger gestattet also ein optisches Ablesen des jeweiligen Füllstandes mittels Zeiger und Skala und zusätzlich ggf. eine elektrische Signalgabe bei bestimmten besonderen Ölständen mittels Mikroschalter.

Weiterhin ist ein Füllstandsanzeiger bekannt, der ein kontinuierliches, analoges elektrisches Signal als Maß für den gemessenen Füllstand generiert. Dazu ist die Zeigerachse im Anzeigeteil mit einem Potentiometer verbunden. Der gemessene Füllstand wird in einen Drehwinkel der Welle umgesetzt, diese Welle betätigt wiederum das Potentiometer; dieses liefert ein analoges elektrisches Signal. Nachteilig bei diesem bekannten Füllstandsanzeiger ist, dass ein mechanischer Kontakt im Potentiometer vorhanden ist, indem dessen Schleifkontakt auf einer kreisförmigen Leiterbahn läuft. In vielen Fällen kommt es dabei zu Kontaktschwierigkeiten, insbesondere durch Verschleiß, aber auch dann, wenn das Potentiometer lange Zeit nicht bewegt worden ist und sich Fremdschichten auf der Leiterbahn gebildet haben.

Aufgabe der Erfindung ist es, einen verbesserten und weiter entwickelten Füllstandsanzeiger der eingangs genannten Art anzugeben, der sowohl eine optische Anzeige mittels eines Zeigers gestattet als auch ein analoges Signal des gemessenen Füllstandes durch eine berührungslose, kontaktfreie Messwerterfassung, die einfach und verschleißfrei aufgebaut sein soll, zur Verfügung stellt.

Diese Aufgabe wird durch einen Füllstandsanzeiger mit den Merkmalen des Patentanspruches gelöst.

Dabei ist ein per se bekannter Miniaturdrehgeber zur berührungslosen Messwerterfassung vorzusehen. Ein solcher Miniaturdrehgeber ist aus der Firmenschrift ELEKTROMAGNETISCHE WINKELCODIERER UND IMPULSGEBER; Modellreihe RXM22 der Firma TWK Elektronik GmbH, Düsseldorf, DE, bzw. ELEKTROMAGNETISCHE WINKELCODIERER, Modellreihe RBM der selben Firma bereits bekannt. Er ist jedoch nicht für gattungsgemäße Füllstandsanzeiger oder für Messgeräte überhaupt an Transformatoren, Drosselspulen oder Stufenschaltern verwendet worden, vielmehr findet er seinen Einsatz bisher etwa in der KFZ-Technik. Er besitzt einen Flansch und ein Gehäuse aus Aluminium sowie eine getrennt zu lagernde Magnetnabe mit Nord- und Südpol aus nicht rostendem Stahl zur Aufnahme von Wellen. Die Erfassung der Winkelposition der aufgenommenen Welle erfolgt mittels Hallsensoren, die zusammen mit der Signalverarbeitung auf einem ASIC integriert sind, über einen Luftspalt von der Magnetnabe. Im Gehäuseinneren befinden sich keine bewegten Teile - demzufolge auch keine Kontaktbahnen, Schleif- oder andere Kontakte mit ihren bekannten Unzulänglichkeiten.

Die Erfindung soll nachfolgend an Hand von Zeichnungen beispielhaft noch näher erläutert werden. Es zeigen:
- Fig. 1: einen erfindungsgemäßen Füllstandsanzeiger in schematischer seitlicher Schnittdarstellung

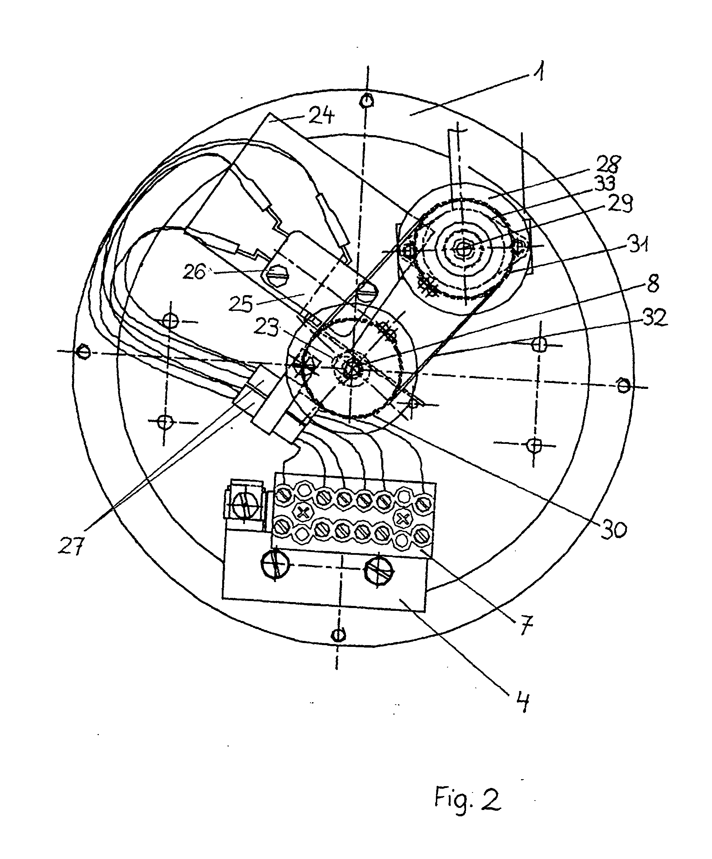

- Fig. 2: eben diesen wiederum schematisch von oben.

Eine Grundplatte 1 trägt den gesamten Füllstandsanzeiger. Daran ist mittels einer Schraube 2 und eines Federrings 3 ein Klemmenträger 4 angeordnet, auf diesem wiederum mit einer weiteren Schraube 5 eine Kabelführung 6 und eine Klemmleiste 7 zum Anschluss der elektrischen Leitungen. Mittig durch das Gerät verläuft eine drehbare Anzeigewelle 8, die in einem Achslager 9 gelagert ist, mit einem an einem Ende daran befestigten Zeiger 10, der seinerseits mit einem Zifferblatt 11 korrespondiert, das entsprechende Markierungen trägt. Unterhalb des Zifferblattes 11 wird die Frontseite des Gerätes durch eine Blende 12 abgeschlossen. Im oberen Bereich der Blende 12 befinden sich zu deren beweglicher Anlenkung Scharnierfedern 13, 14. Zur Befestigung des Zifferblattes 11 auf einem Zifferblattträger 15 dient eine Schraube 16. Die Befestigung des Zifferblattträgers 15 wiederum an der Grundplatte 1 erfolgt durch Stehbolzen 17, 18. Am anderen Ende der drehbaren Anzeigewelle 8 befindet sich eine Magnetkupplung 19, die mit Schraube 20 und Federring 21 befestigt ist, zur Verbindung der Anzeigewelle 8 mit einer nur angedeuteten weiteren Welle 22, die ihrerseits auf bekannte Weise die Hubbewegung eines nicht dargestellten Schwimmers - in eine Drehbewegung umgewandelt - überträgt. Weiterhin sind auf der Anzeigewelle 8 Schaltnocken 23 angeordnet, die mit einem auf einer separaten Isolierplatte 24 angeordneten Mikroschalter 25 zusammenwirken, der hier ein min-/max-Signal beim Erreichen der jeweiligen Endstellung erzeugt. Dessen Befestigung erfolgt durch eine Schraube 26, weiterhin sind Schutzschläuche 27 für die elektrischen Leitungen dort noch vorgesehen.

Zusätzlich ist ein Winkelcodierer 28, z. B. des Typs RBM22 des eingangs genannten Herstellers, vorgesehen, der mit der Anzeigewelle 8 in Verbindung steht.
Der Winkelcodierer 28 ist auf einer separaten Achse 29, parallel zur genannten Anzeigewelle 8, angeordnet. Für eine solche Anordnung sind eine Riemenscheibe 30 auf der Anzeigewelle 8 und eine weitere Riemenscheibe 31 an der Achse 29 des Winkelcodierers 28 vorgesehen; die kraftschlüssige Verbindung der beiden Riemenscheiben 30, 31 erfolgt durch ein Skalenseil 32. Damit führt eine Drehung der Anzeigewelle 8 zu einer gleichförmigen Drehung des Winkelcodierers 28, der wiederum analoge Signale als Maß für die Drehbewegung und damit den gemessenen Füllstand erzeugt; besonders vorteilhaft können dies der Sinus- bzw. Cosinusverlauf sein. Die Weiterverarbeitung erfolgt zweckmäßiger Weise über eine RS485-Schnittstelle.

Die Übertragung der Drehbewegung von der Riemenscheibe 31 auf den Winkelcodierer 28 selbst erfolgt dabei nicht direkt, sondern durch eine zwischengeschaltete Magnetnabe 33 als an sich aus dem Stand der Technik bekannter Bestandteil des Winkelcodierers 28.

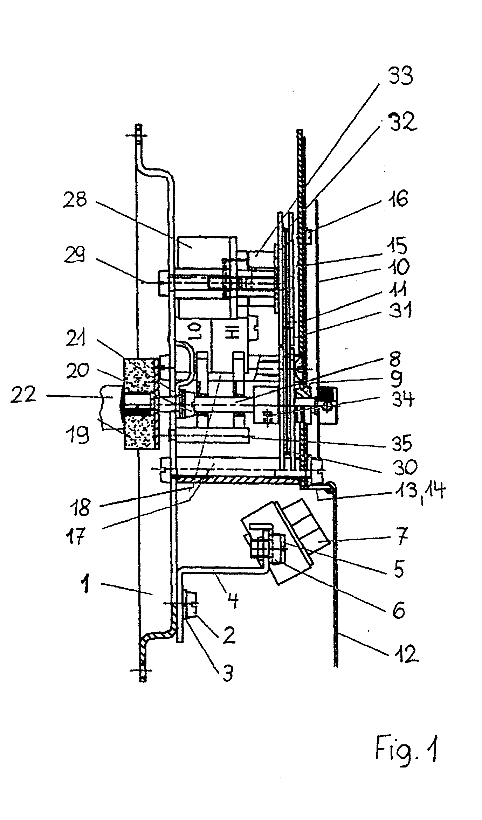

Schließlich sind in Figur 1 noch ein Gewindestift 34 zur Befestigung des Achslagers 9 auf der Anzeigewelle 8 sowie ein Bolzen 35 dargestellt.

Es wird darauf hingewiesen, dass im Ausführungsbeispiel als Übertragungselement ein Skalenseil 32 gezeigt und beschrieben worden ist. Stattdessen ist im Rahmen der Erfindung ebenso gut ein Riemen, ein Zahnriemen, eine Kette oder ein anderes flexibles Übertragungsmittel einsetzbar.

### Bezugszeichenaufstellung

- 1: Grundplatte
- 2: Schraube
- 3: Federring
- 4: Klemmenträger
- 5: Schraube
- 6: Kabelführung
- 7: Klemmleiste
- 8: Anzeigewelle
- 9: Achslager
- 10: Zeiger
- 11: Zifferblatt
- 12: Blende
- 13: Schamierfeder
- 14: Scharnierfeder
- 15: Zifferblattträger
- 16: Schraube
- 17: Stehbolzen
- 18: Stehbolzen
- 19: Magnetkupplung
- 20: Schraube
- 21: Federring
- 22: Welle
- 23: Schaltnocken
- 24: Isolierplatte
- 25: Mikroschalter
- 26: Schraube
- 27: Schutzschläuche
- 28: Winkelcodierer
- 29: separate Achse
- 30: Riemenscheibe
- 31: weitere Riemenscheibe
- 32: Skalenseil
- 33: Magnetnabe
- 34: Gewindestift
- 35: Bolzen

## Patentansprüche

1. Füllstandsanzeiger für ölgefüllte Transformatoren, Drosselspulen oder Stufenschalter,
bestehend aus einem Geberteil und einem Anzeigeteil,
wobei das Geberteil in das Ölausdehnungsgefäß, dessen Füllstand gemessen werden soll, eingebaut ist und einen Schwimmer und eine mit diesem verbundene Schwimmerstange aufweist,
wobei die Schwimmerstange die Hubbewegung des Schwimmers als Drehbewegung auf eine Welle (22) überträgt,
wobei die Welle (22) mit einer Anzeigewelle (8) des Anzeigeteils verbunden ist,
wobei die Anzeigewelle (8) einen Zeiger (10) trägt, der mit einem Zifferblatt (11) korrespondiert,
wobei ein Winkelcodierer (28) vorgesehen ist, der im Anzeigeteil mit der Anzeigewelle (8) kraftschlüssig in Verbindung steht
und wobei der Winkelcodierer (28) aus einer Magnetnabe (33) und einem berührungslos mit dieser zusammenwirkenden ASIC mit Hallsensoren besteht,
**dadurch gekennzeichnet,**
**dass** der Winkelcodierer (28) auf einer separaten Achse (29), die parallel zur Anzeigewelle (8) verläuft, angeordnet ist
und **dass** der Winkelcodierer (28) mittels einer ersten Riemenscheibe (30) auf der Anzeigewelle (8) und einer zweiten Riemenscheibe (31), die in Verbindung mit der Magnetnabe (33) des Winkelcodierers (28) steht und auf der separaten Achse (29) angeordnet ist, sowie einem die beiden Riemenscheiben (30, 31) verbindenden Skalenseil (32) bzw. einem Riemen, Zahnriemen, einer Kette oder einem anderen Verbindungsmittel mit der Anzeigewelle (8) in Verbindung steht.

## Claims

1. Filling state indicator for oil-filled transformers, choke coils or tap changers, consisting of a transmitter part and an indicator part, wherein the transmitter part is installed in the oil expansion vessel of which the filling state is to be measured and comprises a float and a float rod connected therewith, wherein the float rod transmits the stroke movement of the float as rotational movement to a shaft (22), wherein the shaft (22) is connected with an indicator shaft (8) of the indicator part, wherein the indicator shaft (8) carries a pointer (10) which corresponds with a numerals sheet (11), wherein an angle encoder (28) is provided, which is disposed in mechanically positive connection in the indicator part with the indicator shaft (8), and wherein the angle encoder (28) consists of a magnet hub (33) and an application-specific integrated circuit, which co-operates in contactless manner with the hub, with Hall sensors, **characterised in that** the angle encoder (28) is arranged on a separate axle (29) extending parallel to the indicator shaft (8) and that the angle encoder (28) is connected with the indicator shaft (8) by means of a first belt pulley (30) on the indicator shaft (8) and a second belt pulley (31), which is connected with the magnet hub (33) of the angle encoder (28) and is arranged on the separate axle (29), as well as by means of a pulley cable (32) - or a belt, cogged belt, chain or other connecting means - connecting the two belt pulleys (30, 31).

## Revendications

1. Jauge pour transformateurs, inductances ou sélecteurs de prises, isolés à l'huile,
composée d'un capteur et d'un indicateur, le capteur étant monté dans le ballon d'expansion d'huile dont le niveau doit être mesuré, et étant doté d'un flotteur auquel est reliée une tige de flotteur, la tige de flotteur transmettant à un arbre (22) le mouvement de levage du flotteur sous la forme d'un mouvement de rotation, et
l'arbre (22) étant relié à un arbre indicateur (8) de l'indicateur,
l'arbre indicateur (8) comportant une aiguille (10) renvoyant à un cadran (11),
avec un codeur angulaire (28) relié à l'arbre indicateur (8) par complémentarité de force dans l'indicateur
et le codeur angulaire (28) se composant d'un moyeu aimanté (33) ainsi que d'un circuit intégré à application spécifique ASIC coopérant sans contact avec ce moyeu aimanté et doté de capteurs à effet Hall,
**caractérisée en ce que**
le codeur angulaire (28) est disposé sur un axe séparé (29) parallèle à l'arbre indicateur (8),
et le codeur angulaire (28) est relié à l'arbre indicateur (8) à l'aide d'une première poulie (30) sur l'arbre indicateur (8) et à l'aide d'une deuxième poulie (31) reliée au moyeu aimanté (33) du codeur angulaire (28) et placée sur l'axe séparé (29), ainsi qu'à l'aide d'un câble de cadrage (32) ou d'une courroie de commande, d'une courroie crantée, d'une chaîne ou de tout autre moyen de fixation, reliant les deux poulies (30, 31),
